# EUROPÄISCHE PATENTSCHRIFT

(11) **EP 2 841 203 B1**
(45) Veröffentlichungstag und Bekanntmachung des Hinweises auf die Patenterteilung: **13.11.2019**
(21) Anmeldenummer: 13716285.5
(22) Anmeldetag: 12.04.2013
(51) Int. Cl.: B02C 13/30, F16H 3/12, F16H 47/02

(54) **ANTRIEBSEINRICHTUNG UND ARBEITSMASCHINENEINRICHTUNG**
DRIVING DEVICE AND WORK MACHINE DEVICE
SYSTÈME D'ENTRAÎNEMENT ET SYSTÈME DE MACHINE DE TRAVAIL

(30) Priorität: 25.04.2012 DE 102012008105
(43) Veröffentlichungstag der Anmeldung: 04.03.2015
(73) Patentinhaber: Desch Antriebstechnik GmbH & Co. KG, 59759 Arnsberg (DE)
(72) Erfinder: GEILKER, Uwe, 59757 Arnsberg (DE); PLATTFAUT, Bernhard, 59069 Hamm (DE); WINIARSKI, Udo, 58802 Balve (DE)
(74) Vertreter: Basfeld, Rainer
(86) Internationale Anmeldenummer: PCT/EP2013/057710
(87) Internationale Veröffentlichungsnummer: WO 2013/160127

(56) Entgegenhaltungen:
- DE-A1- 3 416 506
- DE-C1- 3 426 083
- FR-A1- 2 651 292

## Beschreibung

Die vorliegende Erfindung betrifft eine Antriebseinrichtung gemäß dem Oberbegriff des Anspruchs 1, eine Arbeitsmaschineneinrichtung gemäß dem Oberbegriff des Anspruchs 10, ein Verfahren zum Überführen einer Antriebseinrichtung aus einem Ruhezustand in einen Betriebszustand gemäß Anspruch 14, ein Verfahren zum Überführen einer Arbeitsmaschineneinrichtung aus einem Ruhezustand in einen Betriebszustand gemäß Anspruch 15 und ein Verfahren zur Beseitigung unerwünschter Betriebszustände gemäß Anspruch 16.

Eine gattungsgemäße Antriebseinrichtung dient in der Regel dem Antrieb einer Arbeitsmaschine, beispielsweise einer Baumaschine, hier insbesondere eines Brechers. Als Hauptantriebsmittel kommt vorzugsweise ein Dieselmotor in Frage. Eine Arbeitsmaschineneinrichtung umfasst im Wesentlichen eine Antriebseinrichtung und eine Arbeitsmaschine, beispielsweise einen Brecher. Insgesamt kann die Arbeitsmaschineneinrichtung damit als beispielsweise Baumaschine ausgestaltet sein.

Die DE 34 26 083 C1 offenbart eine Antriebsvorrichtung mit einer Schlagradwelle zur fliegenden Lagerung eines Schlagrades, eine Lagervorrichtung mit zwei mit axialem Abstand voneinander angeordneten Lagern, in welchen die Schlagradwelle gelagert ist, und ein Getriebe zum Antreiben der Schlagradwelle. Das Getriebe ist ein Planetengetriebe mit einem an ein Antriebsorgan anschließbaren Antriebsteil, mit einem die Schlagradwelle antreibenden Abtriebsteil, und mit einem zur Drehmomentübertragung vom Antriebsteil zum Abtriebsteil dienenden Reaktionsteil.

Nachteilig an derartigen Antriebseinrichtungen bzw. Arbeitsmaschineneinrichtungen ist die Belastung, insbesondere thermische Belastung, der Schaltkupplung während des Anfahrvorgangs.

Hier setzt die vorliegende Erfindung an und macht es sich zur Aufgabe eine verbesserte Antriebseinrichtung der vorgenannten Art bereitzustellen, insbesondere eine Antriebseinrichtung der vorgenannten Art bereitzustellen, deren Schaltkupplung während des Anfahrvorgangs einer geringeren Belastung, insbesondere einer geringeren thermischen Belastung, ausgesetzt ist.

Erfindungsgemäß wird diese Aufgabe durch eine Antriebseinrichtung mit den Merkmalen des Anspruchs 1 gelöst. Dadurch, dass die Antriebseinrichtung mit einem Hilfsantrieb ausgestattet ist, wobei der Hilfsantrieb unabhängig von dem Hauptantriebsmittel zum Antrieb der Getriebeabgangswelle eingerichtet ist, lässt sich insbesondere folgender vorteilhafter Anfahrvorgang ausführen:
Um die Antriebseinrichtung aus dem Ruhezustand in den Betriebszustand zu überführen, kann als erstes das Hauptantriebsmittel, gestartet werden. Die schaltbare Kupplung, über die die Getriebeabgangswelle mit dem Getriebe verbunden ist, ist zunächst geöffnet. Anschließend kann das Hauptantriebsmittel auf die Einschaltdrehzahl (z.B. Leerlaufdrehzahl, "erhöhte" Leerlaufdrehzahl, o.a.) der schaltbaren Kupplung hochgefahren werden. In diesem Zustand kann der Hilfsantrieb, der insbesondere als Hydraulikmotor ausgestaltet sein kann, von einer der Hydraulikpumpen angetrieben werden. Der Hilfsantrieb kann die Getriebeabgangswelle unabhängig von dem eigentlichen Hauptantriebsmittel der Antriebseinrichtung beschleunigen. Sobald der Hilfsantrieb die Getriebeabgangswelle auf die vorgesehene Drehzahl = Einschaltdrehzahl beschleunigt hat, kann die schaltbare Kupplung eingeschaltet werden. Zeitgleich oder etwa zeitgleich kann der Hilfsantrieb abgeschaltet werden. Die schaltbare Kupplung kann die schon rotierende Masse der Getriebeabgangswelle und insbesondere die rotierende Masse der an der Getriebeabgangswelle angeschlossenen Arbeitsmaschine, mit der Drehzahl des Hauptantriebsmittels synchronisieren. Da diese Drehzahldifferenz klein sein wird bzw. gegen Null geht, wird die schaltbare Kupplung thermisch gar nicht bzw. nur gering belastet. Sobald die Drehzahlen synchronisiert sind, kann das Hauptantriebsmittel auf seine Betriebsdrehzahl hochgefahren werden. Der Hilfsantrieb ist bereits abgeschaltet bzw. von der Getriebeabgangswelle getrennt worden.

Weitere vorteilhafte Ausgestaltungen der vorgeschlagenen Erfindung ergeben sich insbesondere aus den Unteransprüchen. Die Merkmale der Unteransprüche können grundsätzlich beliebig miteinander kombiniert werden.

In einer vorteilhaften Ausgestaltung der erfindungsgemäßen Antriebseinrichtung kann vorgesehen sein, dass der Hilfsantrieb dazu eingerichtet ist, wahlweise in einer ersten Drehrichtung und einer zweiten entgegengesetzten Drehrichtung betrieben zu werden, insbesondere dazu eingerichtet ist, sowohl vorwärts als auch rückwärts zu laufen. Durch eine derart ausgestaltete Antriebseinrichtung ergeben sich zahlreiche Vorteile. Im Vorwärtslauf kann der Hilfsantrieb den oben dargestellten Anfahrvorgang ausführen. Im Rücklauf können beispielsweise unerwünschte Betriebszustände, insbesondere ein Verklemmen einer angeschlossenen Arbeitsmaschine, aufgehoben werden. Des weiteren dient der Hilfsantrieb zu einem längerfristigen Betrieb in entgegengesetzter Drehrichtung für einen Produktionsprozess in umgekehrter Drehrichtung.

In einer weiteren vorteilhaften Ausgestaltung der erfindungsgemäßen Antriebseinrichtung kann vorgesehen sein, dass der Hilfsantrieb als Hydraulikmotor, Pneumatikmotor oder Elektromotor ausgestaltet ist. Alle vorgenannten Arten von Antrieben eigenen sich in vorteilhafter Weise als Hilfsantrieb, insbesondere da deren Drehrichtung reversierbar ist und grundsätzlich vorbestimmte Drehwinkelstellungen der Abtriebswelle des Hydraulikmotors bzw. Elektromotors angefahren werden können. Diese Hilfsantriebe stellen in der Regel auch bei einer Drehzahl 0 min⁻¹ ein Drehmoment zur Verfügung. Somit eignen sie sich u.a. für Anfahrvorgänge. Des Weiteren ist ihre Drehrichtung steuerbar; d.h. man kann einen Links- als auch Rechtslauf einstellen. Außerdem ist die Drehzahl einstellbar. Denkbar sind auch andere Arten von Hilfsantrieben, die nicht zwangsläufig die oben genannten Eigenschaften aufweisen.

In einer weiteren vorteilhaften Ausgestaltung der erfindungsgemäßen Antriebseinrichtung kann vorgesehen sein, dass der Hilfsantrieb wahlweise als Hydraulikmotor oder als Hydraulikpumpe arbeiten kann. Der Hydraulikmotor kann, nachdem er seine Funktion als Hilfsantrieb erfüllt hat, eine andere hydraulische Ansteuerung erfahren, so dass er als zusätzliche Hydraulikpumpe arbeiten kann. Hierdurch kann eine weitere Hydraulikpumpe eingespart werden und letztendlich Kosten und Bauraum eingespart werden.

In einer weiteren vorteilhaften Ausgestaltung der erfindungsgemäßen Antriebseinrichtung kann vorgesehen sein, dass das Hauptantriebsmittel als Dieselmotor oder Elektromotor ausgestaltet ist. Die vorgenannten Antriebe stellen grundsätzlich ausreichend Leistung zur Verfügung, um als Hauptantrieb geeignet zu sein. Im Zusammenhang mit dem Einsatz eines Dieselmotors treten die Vorteile der hier vorgeschlagenen Antriebseinrichtung besonders deutlich hervor. Die Drehrichtung der Abtriebswelle eines Dieselmotors kann grundsätzlich nicht geändert werden. Nichtsdestotrotz können Drehrichtungsänderungen der Getriebeabgangswelle durch den Hilfsantrieb vorgenommen werden. Der Dieselmotor übernimmt als Hauptantrieb gewissermaßen den regulären und eher leistungsstarken Antrieb der Getriebeabgangswelle und damit der nachgeschalteten Arbeitsmaschine in der Hauptdrehrichtung. Der Hilfsantrieb kann die Getriebeabgangswelle - neben dem verschleißarmen Hochfahren der Antriebseinrichtung - durch den Vor- und Rücklauf die Getriebeabgangswelle in eine der Hauptdrehrichtung entgegengesetzt Drehrichtung drehen und damit beispielsweise Störungen der nachgeschalten Arbeitsmaschine aufheben. Ferner kann der Hilfsantrieb die Getriebeabgangswelle gewissermaßen auf eine vorbestimmte Winkelposition drehen oder nur wenige langsame Umdrehungen vollziehen.

In einer weiteren vorteilhaften Ausgestaltung der erfindungsgemäßen Antriebseinrichtung kann vorgesehen sein, dass die Antriebseinrichtung mit mindestens einer weiteren Hydraulikpumpe ausgestattet ist, die über das Getriebe angetrieben werden kann. Durch die weiteren Hydraulikpumpen können entsprechend weitere Verbraucher versorgt werden. Im Anwendungsfall eines Brechers können dies beispielsweise hydraulisch klappbare Trichterwände, Verriegelungseinrichtungen für die Aufgabeeinheit, hydraulische bzw. hydraulisch unterstützte Spaltverstellung, hydraulisch absenkbare Nachsiebeinheit und Fahrantriebe sein.

In einer weiteren vorteilhaften Ausgestaltung der erfindungsgemäßen Antriebseinrichtung kann vorgesehen sein, dass die Hydraulikpumpe oder Hydraulikpumpen über schaltbare Kupplungen wahlweise zu- und abgeschaltet werden können. Durch diese Maßnahme kann Im Wesentlichen eine bedarfsgerechte Versorgung angeschlossener Verbraucher sichergestellt werden, indem beispielsweise nicht benötigte Hydraulikpumpen abgeschaltet werden, wodurch letztendlich Energie eingespart und unnötiger Verschleiß der Hydraulikpumpen vermindert werden kann.

In einer weiteren vorteilhaften Ausgestaltung der erfindungsgemäßen Antriebseinrichtung kann vorgesehen sein, dass zwischen dem Hauptantriebsmittel und dem Getriebe eine elastische Kupplung angeordnet ist. Die elastische Kupplung hat im Wesentlichen einmal die Funktion einer "Dämpfungskupplung" und einmal die einer "Ausgleichskupplung". Somit sind deren Aufgaben, Schwingungen in Umfangsrichtung (= Drehmomentspitzen) zu dämpfen und Ausrichtungsfehler zwischen Hauptantriebsmittel und Getriebe auszugleichen. Wenn Schwingungen gedämpft werden, führt dies zu geringen mechanischen Belastungen der drehmomentübertragenden Bauteile. Dies hat zur Folge, dass eine höhere Lebensdauer erreicht wird oder aber dass die Bauteile leichter und/oder dünner ausgeführt werden können. Wenn Ausrichtfehler mit geringen Rückstellkräften ausgeglichen werden, führt dies zu geringen Belastungen für die beispielsweise Lager und Wellen. Auch hierdurch wird eine längere Lebensdauer erreicht.

In einer weiteren vorteilhaften Ausgestaltung der erfindungsgemäßen Antriebseinrichtung kann vorgesehen sein, dass die Antriebseinrichtung mit einer Reversiereinrichtung für das Hauptantriebsmittel ausgestattet ist, die dazu eingerichtet ist, die Getriebeabgangswelle bei gleichbleibender Drehrichtung des Hauptantriebsmittels in unterschiedlichen Drehrichtungen drehen zu lassen. Der Vorteil in dieser Anordnung liegt darin, dass die volle Leistung des Hauptantriebs für die Arbeitsmaschine, insbesondere den Brecher bzw. den Brechvorgang, genutzt werden kann, da der Brecher in beide Drehrichtungen mechanisch angetrieben wird. Da keine Umwandlung der Energie erfolgt, insbesondere Kraftstoff in Hydraulik, sind hierbei bis auf die Verluste im Getriebe keine weiteren Verluste vorhanden; d.h. auch bei dem Produktionsprozess in umgekehrter Drehrichtung ist der gute Wirkungsgrad des Getriebes zu Grunde zu legen.

Eine weitere Aufgabe der vorliegenden Erfindung liegt darin, eine verbesserte Arbeitsmaschineneinrichtung gemäß dem Oberbegriff des Anspruchs 10 bereitzustellen, insbesondere eine Arbeitsmaschineneinrichtung mit einer geringeren Belastung der Schaltkupplung, insbesondere thermischen Belastung, während des Anfahrvorgangs.

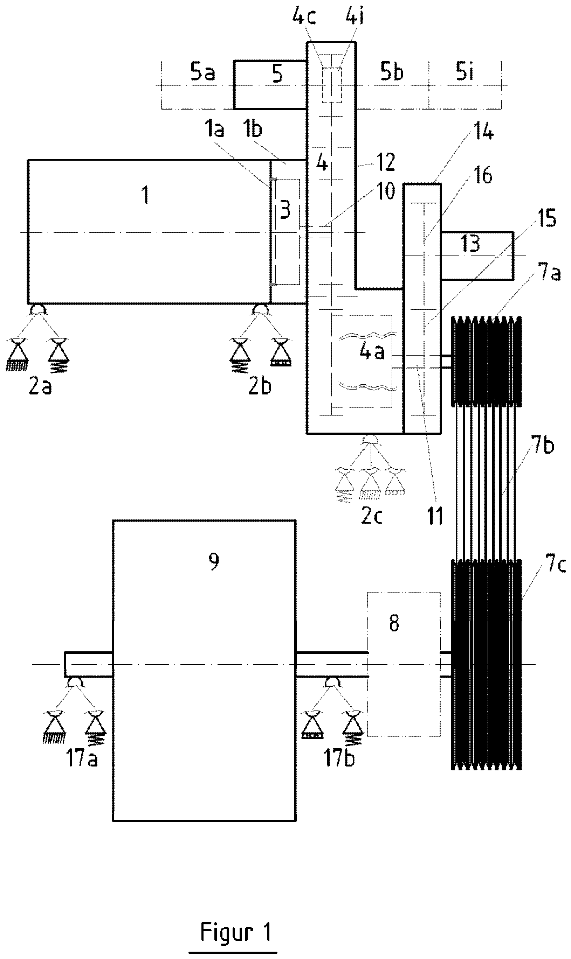

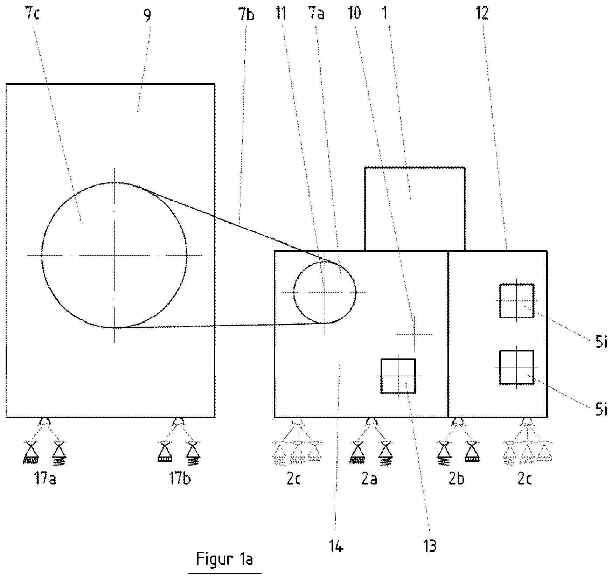

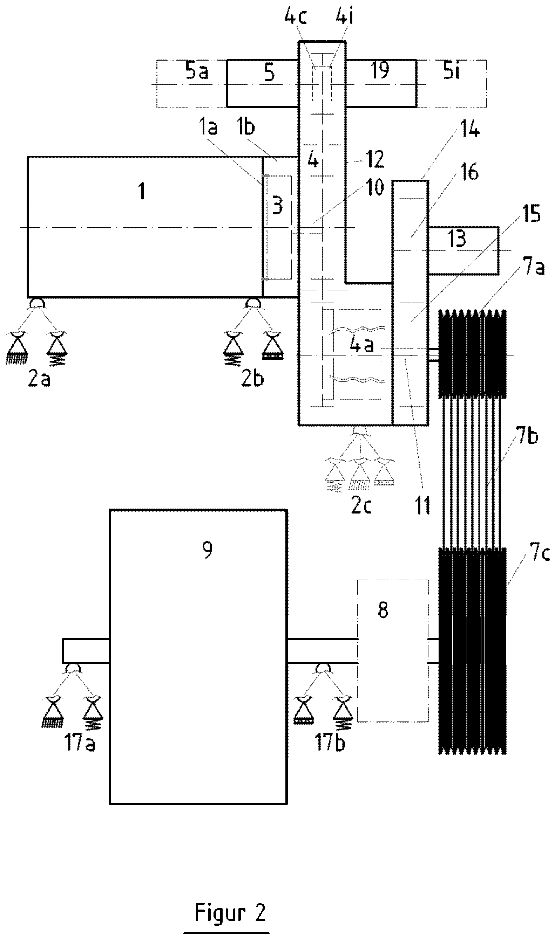

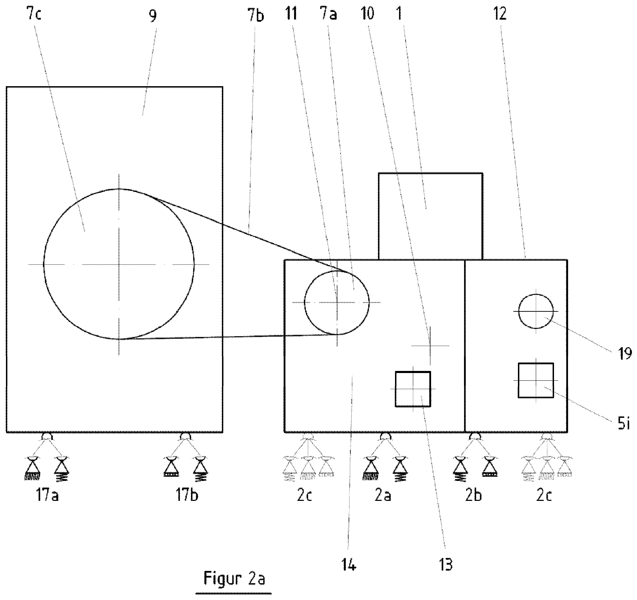

Erfindungsgemäß wird diese Aufgabe durch eine Arbeitsmaschineneinrichtung mit den kennzeichnenden Merkmalen des Anspruchs 10 gelöst. Dadurch, dass es sich um eine Antriebseinrichtung gemäß mindestens einem der Ansprüche 1 bis 9 handelt, lässt sich insbesondere folgender vorteilhafter Anfahrvorgang ausführen. Die Ausführungen beziehen sich zunächst auf den Anfahrvorgang mit einer Arbeitsmaschineneinrichtung gemäß den Fig. 1 bis 2a, sprich mit einer schaltbaren Kupplung 4a vor der Getriebeabgangswelle :
Um die Arbeitsmaschineneinrichtung aus dem Ruhezustand in den Betriebszustand zu überführen, kann als erstes das Hauptantriebsmittel, insbesondere der Dieselmotor, gestartet werden. Die schaltbare Kupplung ist zunächst geöffnet. Anschließend kann das Hauptantriebsmittel auf die Einschaltdrehzahl (z.B. Leerlaufdrehzahl, "erhöhte" Leerlaufdrehzahl, o.a.) der schaltbaren Kupplung hochgefahren werden. In diesem Zustand wird der Hilfsantrieb, der insbesondere als Hydraulikmotor ausgestaltet sein kann, von einer der Hydraulikpumpen angetrieben werden. Der Hilfsantrieb kann die Arbeitsmaschine ab der Abgangswelle des Getriebes beschleunigen mit allen Komponenten die sich dazwischen befinden. Die Arbeitsmaschine kann beispielsweise als Brecher ausgestaltet sein. Sobald der Hilfsantrieb, insbesondere der Hydraulikmotor, die Getriebeabgangswelle auf die vorgesehene Drehzahl = Einschaltdrehzahl beschleunigt hat, kann die schaltbare Kupplung eingeschaltet werden. Zeitgleich kann der Hilfsantrieb abgeschaltet werden. Die schaltbare Kupplung kann die schon rotierenden Massen ab der Getriebeabgangswelle mit der Motordrehzahl synchronisieren. Da diese Drehzahldifferenz klein ist bzw. gegen Null geht, wird die schaltbare Kupplung thermisch gar nicht bzw. nur gering belastet. Sobald die Drehzahlen synchronisiert sind, kann das Hauptantriebsmittel auf seine Betriebsdrehzahl hochgefahren werden. Der Hilfsantrieb kann abgekuppelt werden.

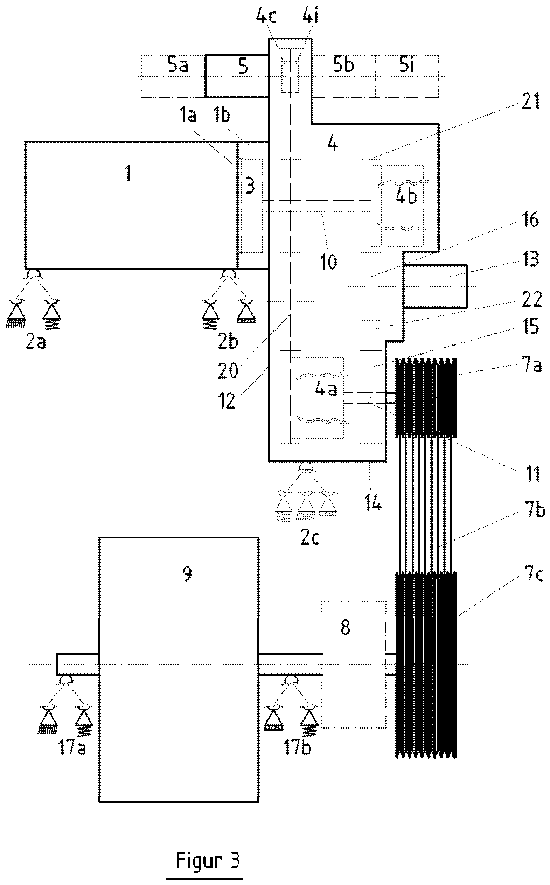

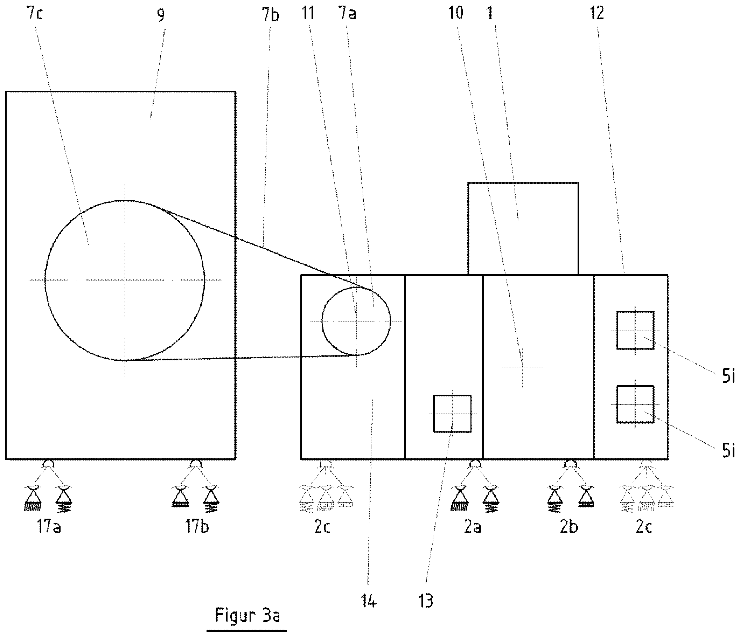

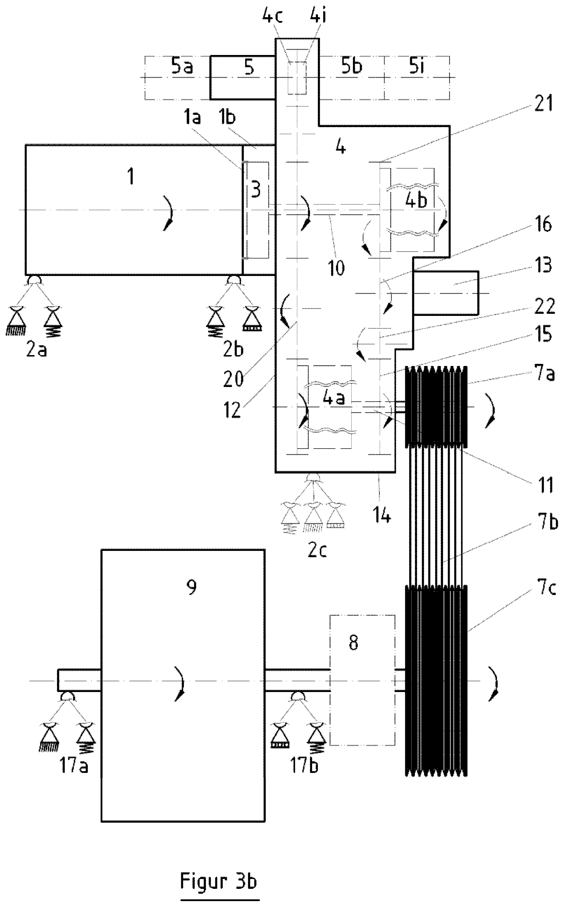

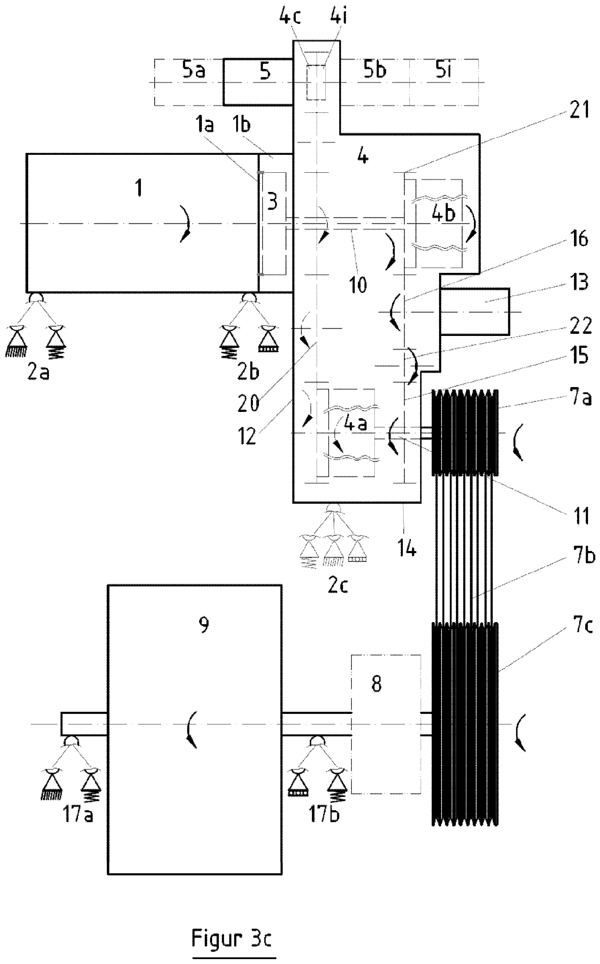

Die nachfolgenden Ausführungen beziehen sich auf den Anfahrvorgang mit einer Arbeitsmaschineneinrichtung gemäß den Fig. 3 bis 3c, sprich mit zwei schaltbaren Kupplungen 4a und 4b vor der Getriebeabgangswelle :
Um die Arbeitsmaschineneinrichtung aus dem Ruhezustand in den Betriebszustand zu überführen, kann als erstes das Hauptantriebsmittel, insbesondere der Dieselmotor, gestartet werden. Die schaltbaren Kupplungen sind zunächst geöffnet. Anschließend kann das Hauptantriebsmittel auf die Einschaltdrehzahl (z.B. Leerlaufdrehzahl, "erhöhte" Leerlaufdrehzahl, o.a.) der schaltbaren Kupplungen hochgefahren werden. In diesem Zustand wird der Hilfsantrieb, der insbesondere als Hydraulikmotor ausgestaltet sein kann, von einer der Hydraulikpumpen angetrieben werden. Der Hilfsantrieb kann die Arbeitsmaschine ab der Abgangswelle des Getriebes beschleunigen mit allen Komponenten die sich dazwischen befinden. Die Arbeitsmaschine kann beispielsweise als Brecher ausgestaltet sein. Sobald der Hilfsantrieb, insbesondere der Hydraulikmotor, die Getriebeabgangswelle auf die vorgesehene Drehzahl = Einschaltdrehzahl beschleunigt hat, kann eine der beiden schaltbaren Kupplungen eingeschaltet werden. Zeitgleich kann der Hilfsantrieb abgeschaltet werden. Die schaltbare Kupplung kann die schon rotierenden Massen ab der Getriebeabgangswelle mit der Motordrehzahl synchronisieren. Da diese Drehzahldifferenz klein ist bzw. gegen Null geht, wird die schaltbare Kupplung thermisch gar nicht bzw. nur gering belastet. Sobald die Drehzahlen synchronisiert sind, kann das Hauptantriebsmittel auf seine Betriebsdrehzahl hochgefahren werden. Der Hilfsantrieb kann abgekuppelt werden.

Weitere vorteilhafte Ausgestaltungen der vorgeschlagenen Erfindung ergeben sich insbesondere aus den Unteransprüchen. Die Merkmale der Unteransprüche können grundsätzlich beliebig miteinander kombiniert werden.

In einer vorteilhaften Ausgestaltung der erfindungsgemäßen Arbeitsmaschineneinrichtung kann vorgesehen sein, dass die Antriebseinrichtung und die Arbeitsmaschine mit einer Übertragungseinrichtung zur Übertragung der Drehbewegung der Getriebeabgangswelle auf die Arbeitsmaschine verbunden sind. Die Übertragungseinrichtung kann beispielsweise als Riementrieb, Kettentrieb oder auch als einfache Wellenverbindung oder Getriebe, beispielsweise Zahnradgetriebe, insbesondere Stirnradgetriebe oder Planetengetriebe, ausgestaltet sein. Jede Ausgestaltung bietet anwendungsspezifische Vorteile. Ein Riementrieb benötigt keine Schmierung und kein Gehäuse. Er kann in der Regel einer einfachen Umhausung oder sogar offen betrieben werden. Hierdurch ist eine einfachere Montage bzw. einfacherer Austausch möglich. Ein Kettentrieb bietet den Vorteil, dass er im Vergleich zum Riementrieb kompakter baut. Auch ist die Leistungsdichte im Vergleich zum Riementrieb größer. Ein Zahnradgetriebe bietet den Vorteil besonders Verschleißarm zu arbeiten. Auch können die Wechsel- bzw. Wartungsintervalle bedeutend länger gewählt werden. Hierdurch wird die effektive Betriebsstundezeit erhöht. Auch benötigt ein Zahnradgetriebe keine Spannvorrichtung.

In einer weiteren vorteilhaften Ausgestaltung der erfindungsgemäßen Arbeitsmaschineneinrichtung kann vorgesehen sein, dass die Übertragungseinrichtung eine Keilscheibe als Übertragungsmittel der Antriebseinrichtung, eine Keilscheibe als Übertragungsmittel der Arbeitsmaschine, sowie einen oder mehrere zwischen den Übertragungsmitten angeordnete Riemen als Übertragungselement aufweist. Eine derartige Ausgestaltung der Übertragungseinrichtung als Riementrieb ist besonders im Zusammenhang mit einem Brecher als Arbeitsmaschine zu nennen. Durch den Riementrieb können die großen Achsabstände bei einem Brecher mit einfachen Mitteln leicht überbrückt werden. Auch ist das erforderliche Übersetzungsverhältnis durch den Riementrieb leicht zu erfüllen.

In einer weiteren vorteilhaften Ausgestaltung der erfindungsgemäßen Arbeitsmaschineneinrichtung kann vorgesehen sein, dass der Hilfsantrieb zum Antrieb der Arbeitsmaschine im Produktionsbetrieb, sowohl in einer ersten Drehrichtung, als auch in einer zweiten, entgegengesetzten Drehrichtung eingerichtet ist. Mit anderen Worten, kann der Hilfsantrieb auch längerfristig die Aufgabe des Hauptantriebs übernehmen und dies in beiden Drehrichtungen.

Eine weitere Aufgabe der vorliegenden Erfindung liegt darin, ein vorteilhaftes Verfahren zum Überführen einer Antriebseinrichtung aus einem Ruhezustand in einen Betriebszustand vorzuschlagen.

Gelöst wird diese Aufgabe durch ein Verfahren gemäß Anspruch 14, umfassend nachfolgende Verfahrensschritte. Es sind sowohl die Ausführungsformen mit einer schaltbaren Kupplung 4a gemäß Fig. 1 bis 2a, als auch mit zwei schaltbaren Kupplungen 4a und 4b gemäß den Fig. 3 bis 3c in Klammern berücksichtigt:
- die schaltbare(n) Kupplung(en) ist / sind ausgekuppelt;
- das Hauptantriebsmittel wird gestartet und auf eine Einschaltdrehzahl, insbesondere auf eine Leerlaufdrehzahl oder "erhöhte" Leerlaufdrehzahl, der schaltbaren Kupplung(en) hochgefahren;

- der Hilfsantrieb beschleunigt die Getriebeabgangswelle;
- sobald der Hilfsantrieb die Getriebeabgangswelle auf die vorgesehene Einschaltdrehzahl beschleunigt hat, wird die schaltbare Kupplung (4a oder 4b) eingeschaltet und der Hilfsantrieb abgeschaltet.

Durch das hier vorgeschlagene Verfahren lässt sich die Antriebseinrichtung sehr verschleißarm aus dem Ruhezustand in einen Betriebszustand überführen, da die schaltbare Kupplung kaum belastet wird.

Eine weitere Aufgabe der vorliegenden Erfindung liegt darin, ein vorteilhaftes Verfahren zum Überführen einer

Arbeitsmaschineneinrichtung aus einem Ruhezustand in einen Betriebszustand vorzuschlagen.

Gelöst wird diese Aufgabe durch ein Verfahren gemäß Anspruch 15, umfassend nachfolgende Verfahrensschritte:
- die schaltbare Kupplung(en) ist / sind ausgekuppelt;
- das Hauptantriebsmittel wird gestartet und auf eine Einschaltdrehzahl, insbesondere auf eine Leerlaufdrehzahl oder "erhöhte" Leerlaufdrehzahl, der schaltbaren Kupplung(en) hochgefahren;
- der Hilfsantrieb beschleunigt die Getriebeabgangswelle und mindestens die Arbeitsmaschine;
- sobald der Hilfsantrieb die Getriebeabgangswelle und die Arbeitsmaschine auf die vorgesehene Einschaltdrehzahl beschleunigt hat, wird die schaltbare Kupplung (4a oder 4b) eingeschaltet und der Hilfsantrieb abgeschaltet.

Durch das hier vorgeschlagene Verfahren lässt sich die Arbeitsmaschineneinrichtung sehr verschleißarm aus dem Ruhezustand in einen Betriebszustand überführen, da die schaltbare Kupplung kaum belastet wird.

Eine weitere Aufgabe der vorliegenden Erfindung liegt darin, ein Verfahren zur Beseitigung unerwünschter Betriebszustände, insbesondere zur Beseitigung eines Verklemmens einer angeschlossenen Arbeitsmaschine in einer Arbeitsmaschineneinrichtung vorzuschlagen.

Erfindungsgemäß wird dies durch ein Verfahren gemäß Anspruch 16 gelöst. Es sind sowohl die Ausführungsformen mit einer schaltbaren Kupplung 4a gemäß Fig. 1 bis 2a, als auch mit zwei schaltbaren Kupplungen 4a und 4b gemäß den Fig. 3 bis 3c in Klammern berücksichtigt. Dadurch, dass das Verfahren nachfolgende Verfahrensschritte umfasst:
- Auskuppeln der schaltbaren Kupplung(en);
- Anfahren des Hilfsantriebs (13) in einer Drehrichtung entgegengesetzt der durch das Hauptantriebsmittel (1) vorgegebenen Drehrichtung,
können unerwünschte Betriebzustände, wie beispielsweise das Verklemmen des Brechers, gelöst werden.

Zusammenfassend kann festgestellt werden, dass eine Antriebseinrichtung bzw. eine Arbeitsmaschineneinrichtung vorgeschlagen wird, bei der das Getriebe die Drehbewegung des Hauptantriebsmittels grundsätzlich auf mindestens zwei Stränge verteilt, sprich einen ersten Antriebsstrang für einen oder mehrere Hydraulikpumpen und einen zweiten Antriebsstrang, der die Getriebeabgangswelle antreibt. Die Getriebeabgangswelle wiederum kann die eigentliche Arbeitsmaschine, wie beispielsweise einen Brecher antreiben. Mit offener bzw. offenen Schaltkupplung(en) zwischen dem Hauptantrieb und der Getriebeabgangswelle kann die Getriebeabgangswelle und nachgelagerte Komponenten, wie beispielsweise die Arbeitsmaschine, mit dem Hilfsantrieb auf eine geeignete Drehzahl beschleunigt werden. Parallel hierzu kann das Hauptantriebsmittel auf eine synchrone bzw. annähernd synchrone Drehzahl beschleunigt werden. Im Wesentlichen liegt die Antriebsdrehzahl an der Antriebsseite der Schaltkupplung(en) an, während die Drehzahl des Hilfsantriebs an der Abtriebsseite der Schaltkupplung(en) anliegt. Wenn diese beiden Drehzahlen synchron oder annähernd synchron sind, kann die Schaltkupplung ohne oder zumindest mit geringem Verschleiß geschlossen werden.

Gleichermaßen bietet der Hilfsantrieb die Möglichkeit der sogenannten "Reversierung", sprich die Getriebeabgangswelle und entsprechend alle nachgeordneten Komponenten können in einer entgegengesetzten Drehrichtung angetrieben werden, wodurch insbesondere ein verklemmter Brecher als Arbeitsmaschine, beispielsweise weil Steine den Brecher verklemmen, wieder freigefahren werden kann. Des Weiteren kann der Hilfsantrieb zu einem längerfristigen Betrieb in entgegengesetzter Drehrichtung dienen, insbesondere für einen Produktionsprozess in umgekehrter Drehrichtung.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine erfindungsgemäße Arbeitsmaschineneinrichtung mit einer erfindungsgemäßen Antriebseinrichtung in einer schematischen Darstellung in einer Ansicht "von Oben";
- Fig. 1a: eine erfindungsgemäße Arbeitsmaschineneinrichtung mit einer erfindungsgemäßen Antriebseinrichtung in einer schematischen Darstellung in einer Ansicht "von Vorne"
- Fig. 2: eine erfindungsgemäße Antriebseinrichtung in einer schematischen Darstellung in einer Ansicht "von Oben";
- Fig. 2a: eine erfindungsgemäße Antriebseinrichtung in einer schematischen Darstellung in einer Ansicht "von Vorne";
- Fig. 3: eine erfindungsgemäße Antriebseinrichtung in einer schematischen Darstellung in einer Ansicht "von Oben";
- Fig. 3a: eine erfindungsgemäße Antriebseinrichtung in einer schematischen Darstellung in einer Ansicht "von Vorne";
- Fig. 3b: eine erfindungsgemäße Antriebseinrichtung in einer schematischen Darstellung in einer Ansicht "von Oben" mit Brecherdrehrichtung gleich Hauptantriebsdrehrichtung;
- Fig. 3c: eine erfindungsgemäße Antriebseinrichtung in einer schematischen Darstellung in einer Ansicht "von Oben" mit Brecherdrehrichtung entgegengesetzt Hauptantriebsdrehrichtung.

Folgende Bezugszeichen werden in den Abbildungen verwendet:
- 1: Hauptantriebsmittel / Dieselmotor
- 1a: Motorschwungrad
- 1b: Anschlussgehäuse
- 2: Befestigungselement
- 3: elastische Kupplung
- 4: Getriebe
- 4a: schaltbare Kupplung
- 4b: schaltbare Kupplung
- 4c-4i: schaltbare Kupplungen
- 5: Hydraulikpumpe
- 5a-5i: Hydraulikpumpen
- 6: - leer -
- 7a: Keilscheibe
- 7b: Riemen
- 7c: Keilscheibe
- 8: weitere Komponenten, insbesondere Wellen, Kardanwellen, Wellenkupplungen, Getriebe, Zahnkupplungen, usw.
- 9: Arbeitsmaschine, insbesondere Brecher
- 10: Getriebeeingangswelle
- 11: Getriebeabgangswelle
- 12: Gehäuse
- 13: Hilfsantrieb / Hydraulikmotor
- 14: Zahnradstufe / Gehäuse
- 15: erstes Zahnrad, insbesondere Stirnrad
- 16: zweites Zahnrad, insbesondere Stirnrad
- 17: Lagerelement
- 18: - frei -
- 19: Generator
- 20: Zahnrad
- 21: drittes Zahnrad, insbesondere Stirnrad
- 22: viertes Zahnrad, insbesondere Stirnrad

Eine erfindungsgemäße Antriebseinrichtung, umfasst im Wesentlichen ein Hauptantriebsmittel 1 und ein Getriebe 4 mit einem ersten Abtrieb und mindestens einem zweiten Abtrieb, sowie einen Hilfsantrieb 13.

Ferner umfasst die erfindungsgemäße Antriebseinrichtung mindestens eine Hydraulikpumpe 5, eine schaltbare Kupplung 4a und ein Übertragungsmittel, insbesondere eine Keilscheibe 7a.

Ferner kann die Antriebseinrichtung einen Generator 19 umfassen.

Der erste Abtrieb des Getriebes 4 dient zum Antrieb der mindestens einen Hydraulikpumpe 5 und ggf. der weiteren Hydraulikpumpen 5a bis 5i. Der zweite Abtrieb des Getriebes 4 dient dem Antrieb des Übertragungsmittels 7a und kann beispielsweise als Getriebeabgangswelle 11 ausgestaltet sein. Das Übertragungsmittel kann beispielsweise als Keilscheibe 7a ausgestaltet sein und dient im Wesentlichen der Koppelung mit bzw. dem Antrieb einer Arbeitsmaschine 9. Der zweite Abtrieb des Getriebes bzw. die Getriebeabgangswelle 11 ist entsprechend zum Antrieb der Arbeitsmaschine 9 eingerichtet.

Das Getriebe kann weitere Abtriebe aufweisen, die beispielsweise den Generator 19 antreiben.

In den zweiten Abtriebsstrang des Getriebes 4 ist die schaltbare Kupplung 4a zwischengeschaltet. Die schaltbare Kupplung 4a ist der Getriebeabgangswelle 11 vorgeschaltet und kann entsprechend die Getriebeabgangswelle 11 bzw. das Übertragungsmittel 7a zu- und abschalten.

Ferner kann die erfindungsgemäße Antriebseinrichtung insbesondere ein Anschlussgehäuse 1b, ein Motorschwungrad 1a, Befestigungselemente 2a, 2b 2c, eine elastische Kupplung 3, eine Getriebeeingangswelle 10, eine Zahnradstufe 14, umfassend insbesondere ein erstes Zahnrad 15 und ein zweites Zahnrad 16, aufweisen.

Eine ebenfalls erfindungsgemäße Arbeitsmaschineneinrichtung, umfasst im Wesentlichen die erfindungsgemäße Antriebseinrichtung und eine Arbeitsmaschine, insbesondere einen Brecher 9. Darüber hinaus umfasst die erfindungsgemäße Arbeitsmaschineneinrichtung ein zu der Antriebseinrichtung kompatibles Übertragungsmittel, insbesondere eine Keilscheibe 7c. Ferner kann die erfindungsgemäße Arbeitsmaschineneinrichtung Lagerelemente 17a, 17 und ggf. weitere Komponenten 8, insbesondere Wellen, Kardanwellen, Wellenkupplungen, Getriebe, Zahnkupplungen, usw. umfassen.

Das Übertragungsmittel 7a der Antriebseinrichtung und das der Arbeitsmaschine 9 zugeordnete Übertragungsmittel 7c bilden insbesondere zusammen mit einem geeigneten Übertragungselement, beispielsweise einem Riemen 7b, eine Übertragungseinrichtung, mit welcher die ausgehende Drehbewegung des Getriebes, sprich der diesbezüglichen Getriebeabgangwelle 11 des Getriebes 4, an die Arbeitsmaschine 9, sprich deren Eingangswelle, übertragen kann. In dem hier skizzierten Beispiel ist die Übertragungseinrichtung als Riementrieb ausgestaltet. Denkbar sind auch andere Übertragungseinrichtungen, wie beispielsweise ein Kettentrieb, umfassend entsprechend zwei Zahnräder als Übertragungsmittel und eine Gelenkkette als Übertragungselement. Denkbar ist beispielsweise auch eine Ausgestaltung der Übertragungseinrichtung als einfache Wellenverbindung oder Getriebe, beispielsweise Zahnradgetriebe, insbesondere Stirnradgetriebe, oder Planetengetriebe.

Der Hilfsantrieb 13, der beispielsweise als Hydraulikmotor, Pneumatikmotor oder Elektromotor ausgestaltet sein kann, ist mit der Getriebeabgangswelle 11 des Getriebes verbunden, beispielsweise über ein Zahnradgetriebe 15, 16.

Weitere Details der vorgeschlagenen Erfindung ergeben sich insbesondere aus den weiteren Ausführungen zur Funktion der Antriebseinrichtung bzw. Arbeitsmaschineneinrichtung. Die Antriebseinrichtung bzw. Arbeitsmaschineneinrichtung wird in der Regel mit einem Dieselmotor oder mit einen E-Motor als Hauptantriebsmittel ausgeführt. Aber auch weitere Hauptantriebsmittel sind möglich. Die folgende Beschreibung erfolgt am Beispiel "Dieselmotor als Antriebsmaschine" (siehe Figur 1). Ferner erfolgt die Beschreibung am Beispiel eines Hydraulikmotors als Hilfsantrieb, wobei auch hier andere Hilfsantriebe denkbar sind.

Um den Anlaufvorgang bei Antriebseinrichtungen und/oder Arbeitsmaschineneinrichtungen, bei denen hohe Anforderungen (z.B.: große zu beschleunigende Massenträgheiten, lange Rutschzeiten, hohe Lastmomente, usw.) an reibschlüssige Schaltkupplungen gestellt werden (so genannte "Schweranläufe"), für die verwendeten Komponenten ohne steuerungstechnische Maßnahmen sicherer zu machen, ist das folgend beschriebene Antriebskonzept erarbeitet worden.

Direkt an dem Anschlussgehäuse 1b des Dieselmotors 1 wird das Getriebe 4 angeflanscht. Der Dieselmotor 1 ist z.B. auf den Rahmen einer mobilen Baumaschine (nicht dargestellt) mit entsprechenden Befestigungselementen 2a / 2b befestigt. Optional kann das Getriebe 4 ebenfalls mit entsprechenden Befestigungselementen 2c an den Rahmen der Baumaschine befestigt werden. An dem Motorschwungrad 1a kann die elastische Kupplung 3 angeflanscht werden, die wiederum auf der Getriebeeingangswelle 10 des Getriebes 4 angeordnet ist. Die elastische Kupplung 3 hat im Wesentlichen einmal die Funktion einer "Dämpfungskupplung" und einmal die einer "Ausgleichskupplung". Somit sind deren Aufgaben, Schwingungen in Umfangsrichtung (= Drehmomentspitzen) zu dämpfen und Ausrichtungsfehler zwischen Dieselmotor 1 und Getriebe 4 auszugleichen. Auf der Getriebeeingangswelle 10 des Getriebes 4 befindet sich das antreibende Zahnrad für den "Pumpenstrang" / die "Pumpenstränge". Die Anzahl und der Typ der Hydraulikpumpe(n) 5 / 5a bis 5i und deren Anschlussgeometrien ist anwendungsspezifisch und kann somit stark variieren. Die Pumpenstränge lassen sich mit Hilfe von schaltbaren Kupplungen 4c bis 4i, die innerhalb oder auch außerhalb des Getriebes 4 angeordnet sein können, zu- bzw. wegzuschalten. Hierdurch kann die Energiebilanz der Antriebseinrichtung bzw. Arbeitsmaschineneinrichtung optimiert werden, da die aktuell nicht benötigten Hydraulikpumpen abgeschaltet werden können und somit keine Verlustleistungen produzieren.

Der Drehmomentenfluß zwischen der Getriebeeingangswelle 10 und der Getriebeabgangswelle 11 des Getriebes 4 ist mit einer schaltbaren Kupplung 4a zu unterbrechen bzw. miteinander zu verbinden. Die Betätigungsart der schaltbaren Kupplungen 4a / 4b bis 4i ist hier für die Funktion nicht relevant und kann somit beliebig gewählt werden. Häufige Betätigungsarten sind hydraulischer oder pneumatischer Druck, elektromagnetische Kraft, Federkraft, mechanische Betätigungen usw. Die folgenden Beschreibungen beziehen sich auf Kupplungen, die über hydraulischen Druck betätigt werden.

Die Getriebeeingangswelle 10 als auch die Getriebeabgangswelle 11 sind mit Lagern in dem Gehäuse 12 des Getriebes 4 gelagert. Auf der Getriebeabgangswelle 11 des Getriebes 4 ist eine erste Keilscheibe 7a aufgesteckt. Der Riementrieb 7a, b und c kann nun, wie beispielhaft in Figur 1 gezeigt, über eine zweite Keilscheibe 7c eine Arbeitsmaschine, z.B. Brecher 9, antreiben. Zwischen der angetriebenen Keilscheibe 7c und der Arbeitsmaschine 9 können weitere Komponenten 8, wie z.B. Wellen, Kardanwellen, Wellenkupplungen, Getriebe, Zahnkupplungen, usw. angeordnet sein. Die Arbeitsmaschine 9 selbst kann wiederum über entsprechende Lagerelemente 17a / 17b z.B. mit dem Rahmen der Maschine befestigt werden. Zwischen der schaltbaren Kupplung 4a und der ersten Keilscheibe 7a befindet sich eine weitere Zahnradstufe 14, deren erstes Zahnrad 15 mit der Getriebeabgangswelle 11 verbunden ist. Mit dem zweiten Zahnrad 16 dieser Zahnradstufe 14 ist der Hilfsantrieb 13 verbunden.

Der Anlaufvorgang kann sich wie folgt gestalten.

Im Ruhezustand der Antriebseinrichtung und/oder der Arbeitsmaschineneinrichtung haben die verwendeten Komponenten folgenden Zustand. Der Dieselmotor 1 ist nicht gestartet, die schaltbare Reibungskupplung 4a ist geöffnet, d.h. drucklos und der Drehmomentenfluß zwischen Getriebeeingang und -ausgang ist somit unterbrochen, die Arbeitsmaschine ist vorzugsweise Lastmomentenfrei (im beschriebenen Beispiel ist somit der Brecher 9 leer) und auch die optionalen, schaltbaren Kupplungen 4c bis 4i können geöffnet sein.

Um die Antriebseinrichtung und/oder Arbeitsmaschineneinrichtung aus dem Ruhezustand in den Betriebszustand zu überführen, wird nun als erstes das Hauptantriebsmittel 1 gestartet. Anschließend wird er auf die Einschaltdrehzahl (z.B. Leerlaufdrehzahl, "erhöhte" Leerlaufdrehzahl, o.a.) der schaltbaren Kupplung 4a hochgefahren. In diesem Zustand wird der Hilfsantrieb, insbesondere der Hydraulikmotor 13, von einer der Hydraulikpumpe z.B. eine der Pumpen 5 bis 5i angetrieben. Der Hydraulikmotor 13 beschleunigt ab der Getriebeabgangswelle 11 den Brecher 9 mit allen Komponenten die sich dazwischen befinden. Sobald der Hydraulikmotor 13 die Getriebeabgangswelle 11 auf die vorgesehene Drehzahl = Einschaltdrehzahl beschleunigt hat, wird die schaltbare Kupplung 4a eingeschaltet. Zeitgleich wird der Hydraulikmotor 13 abgeschaltet. Die schaltbare Kupplung 4a muss die schon rotierenden Massen ab der Getriebeabgangswelle 11 mit der Motordrehzahl synchronisieren. Da diese Drehzahldifferenz klein ist bzw. gegen Null geht, wird die schaltbare Kupplung 4a thermisch gar nicht bzw. nur gering belastet. Sobald die Drehzahlen synchronisiert sind, kann das Hauptantriebsmittel 1 auf seine Betriebsdrehzahl hochgefahren werden. Der Hydraulikmotor 13 erfährt in diesem Zustand eine andere hydraulische Ansteuerung, so dass er jetzt als zusätzliche Hydraulikpumpe arbeiten kann.

Im Falle von hydraulisch betätigten Kupplungen kann die Versorgung der schaltbaren Kupplung 4a bzw. 4b, aber auch die der optionalen Schaltkupplungen 4c bis 4i, mit Schalt- und / oder auch Kühlöl vorzugsweise mit Hydraulikpumpen erfolgen, die an dem Getriebe 4 befestigt sind. Somit ist die Einheit Getriebe 4 und schaltbare Kupplungen 4a / 4b und 4c bis 4i eine autarke Baugruppe. Vorher, in diesem Zustand oder auch nachher können einzelne, mehrere oder alle der optionalen, schaltbaren Kupplungen 4c bis 4i zugeschaltet werden um die Hydraulikpumpe(n) 5 / 5a bis 5i anzutreiben. Dies ist abhängig von der Anwendung selber, aber auch von deren Arbeitsweise und soll hier nicht explizit beschrieben werden.

Aus dieser Verknüpfung der Einzelkomponenten, insbesondere elastischer Kupplung 3 (optional), Getriebe 4 mit schaltbarer Kupplung 4a, schaltbaren Kupplung(en) 4c bis 4i (optional), Hydraulikmotor 13 und einer gelagerten Keilscheibe 7a ist eine Einheit entwickelt worden, mit denen Arbeitsmaschinen zu- und auch abschaltbar angetrieben werden können. Die Einheit kann durch die geschickte Auswahl der Einzelkomponenten und deren Betätigung so abgestimmt werden, dass jede Einzelkomponente nur gering belastet wird und somit eine lange, sichere und wirtschaftliche Lebensdauer für sie zu erwarten ist.

Die bisher geschilderte Einheit ist Bestandteil eines Baukastensystems; d.h. bei Antriebseinrichtungen und/oder Arbeitsmaschineneinrichtungen bei denen niedrigere Belastungszustände, insbesondere geringere zu beschleunigende Massenträgheitsmomente, keine oder nur geringe Lastmomente, usw., vorkommen, ist es auch möglich den Anlaufvorgang nur über die schaltbare Reibungskupplung 4a zu bewerkstelligen. In diesem Fall kann die zusätzliche Zahnradstufe 14 aus der Einheit entfallen. Auch bietet der Baukasten den Einsatz oder den Verzicht auf eine elastische Kupplung 3 und / oder der schaltbaren Kupplungen 4c bis 4i zum zu- oder abschalten der Hydraulikpumpe(n).

Die Reversierung der Antriebseinrichtung, sprich die Drehrichtungsumkehr der Getriebeabgangswelle 11, erfolgt im Wesentlichen durch Drehrichtungsumkehr des Hilfsantriebs 13, wobei die schaltbare Kupplung 4a zuvor ausgekuppelt werden sollte. Hierdurch können unerwünschte Betriebszustände, insbesondere ein Verklemmen einer angeschlossenen Arbeitsmaschine in einer Arbeitsmaschineneinrichtung beseitigt werden. Des Weiteren kann der Hilfsantrieb einem längerfristigen Betrieb in entgegengesetzter Drehrichtung dienen, insbesondere für einen Produktionsprozess in umgekehrter Drehrichtung.

Eine Ausführungsform der Erfindung betrifft eine Antriebseinrichtung, umfassend mindestens ein Hauptantriebsmittel 1, ein Getriebe 4, eine Hydraulikpumpe 5, eine schaltbare Kupplung 4a und eine Keilscheibe 7a, wobei das Hauptantriebsmittel 1 zum Antrieb des Getriebes 4 eingerichtet ist, wobei das Getriebe 4 mindestens zum Antrieb der Hydraulikpumpe 5 und zum Antrieb der schaltbaren Kupplung 4a eingerichtet ist, wobei die schaltbare Kupplung 4a zum Antrieb der Keilscheibe 7a eingerichtet ist, wobei die Antriebseinrichtung mit einem Hilfsantrieb 13 ausgestattet ist, wobei der Hilfsantrieb 13 zum Antrieb der Keilscheibe 7a eingerichtet ist, sowie eine Arbeitsmaschineneinrichtung, umfassend eine erfindungsgemäße Antriebseinrichtung und eine Arbeitsmaschine 9.

Eine weitere Ausführungsform der erfindungsgemäßen Antriebseinrichtung bzw. Arbeitsmaschineneinrichtung ist in den Fig. 3 bis 3c dargestellt.

Die hier dargestellte weitere Ausführungsform der erfindungsgemäßen Antriebseinrichtung bzw. Arbeitsmaschineneinrichtung umfasst eine Reversiereinrichtung für das Hauptantriebsmittel. Die Reversiereinrichtung für das Hauptantriebsmittel umfasst im Wesentlichen eine weitere schaltbare Kupplung 4b, ein drittes Zahnrad 21 und ein viertes Zahnrad 22. Durch diese zusätzlichen Komponenten wird ermöglicht, dass die Getriebeabgangswelle 11 von dem Hauptantriebsmittel, sprich dem Dieselmotor, wahlweise in zwei Drehrichtungen angetrieben werden kann.

Die Drehrichtungsangabe bei dieser Beschreibung beruht auf der Blickrichtung vom Getriebe 4 auf den Motor 1.

Das Motorschwungrad 1a wird hier im Beispiel immer links herum angetrieben. Folglich dreht die Getriebeeingangswelle 10 auch links herum. Wenn die sich auf der Getriebeabgangswelle 11 befindende schaltbare Kupplung 4a geschlossen ist und die sich auf der Getriebeeingangswelle 10 befindende schaltbare Kupplung 4b geöffnet ist, überträgt die Räderkette zwischen Getriebeeingangswelle 10 und schaltbarer Kupplung 4a die Leistung vom Dieselmotor 1 zur Getriebeabgangswelle 11. Hierbei dreht sich das Zahnrad 20 rechts herum und die Getriebeabgangswelle 11 links herum. Das Zahnrad 15 läuft somit auch links herum und treibt über das Zahnrad 22, Drehrichtung rechts, das Zahnrad 15, Drehrichtung links, das Zahnrad auf der schaltbaren Kupplung 4b, Drehrichtung rechts, an. Das Zahnrad an der schaltbaren Kupplung 4b ist auf der Getriebeeingangswelle 10 gelagert und überträgt bei geöffneter Kupplung keine Leistung.

Wenn die sich auf der Getriebeeingangswelle 10 befindende schaltbare Kupplung 4b geschlossen ist und die sich auf der Getriebeabgangswelle 11 befindende schaltbare Kupplung 4a geöffnet ist, überträgt die Räderkette zwischen schaltbarer Kupplung 4b und Getriebeabgangswelle 11 die Leistung vom Dieselmotor 1. Das Motorschwungrad 1a wird hier im Beispiel immer links herum angetrieben. Folglich dreht die Getriebeeingangswelle 10 und das Zahnrad 21 an der schaltbaren Kupplung auch links herum. Dieses Zahnrad treibt über das Zahnrad 16, Drehrichtung rechts, das Zahnrad 22, Drehrichtung links, das Zahnrad 15 und somit die Getriebeabgangswelle 11 rechts herum an. Da das Zahnrad an der schaltbaren Kupplung 4a auf der Getriebeabgangswelle 11 gelagert ist, wird bei geöffneter Kupplung 4a keine Leistung übertragen. Die Räderkette zwischen Getriebeeingangswelle 10 und schaltbar Kupplung 4a läuft leistungsfrei mit.

Je nachdem in welcher Richtung der Hydraulikmotor 13 die Getriebeausgangswelle 11 und die sich dahinter befindenden Massen beschleunigt kann mit dem gezielten Schalten einer der beiden Kupplungen 4a oder 4b, bei immer gleicher Antriebsdrehrichtung des Dieselmotors 1, die Drehrichtung der Getriebeabgangswelle 11 und damit der Arbeitsmaschine 9 gesteuert werden.

Die Reversiereinrichtung für das Hauptantriebsmittel wird im Wesentlichen durch zwei Räderketten mit jeweils einer Schaltkupplung pro Räderkette gebildet, wobei die Räderketten eine unterschiedliche Anzahl von Zahnrädern aufweisen. Letztendlich muss es sich bei den Räderketten auch nicht zwangsläufig um Zahnräder handeln; auch Riementriebe oder andere geeignete Übertragungseinrichtungen kommen hierzu in Frage.

## Patentansprüche

1. Antriebseinrichtung, umfassend mindestens
- ein Hauptantriebsmittel (1), eine Hydraulikpumpe (5, 5a bis 5i), mindestens eine schaltbare Kupplung (4a, 4b) und ein Getriebe (4), mit einem ersten Abtrieb und mindestens einem zweiten Abtrieb, wobei
- das Hauptantriebsmittel (1) zum Antrieb des Getriebes (4), eingerichtet ist, wobei
- der erste Abtrieb des Getriebes (4) zum Antrieb der mindestens einen Hydraulikpumpe (5, 5a bis 5i) eingerichtet ist, wobei
- der zweite Abtrieb des Getriebes (4) als Getriebeabgangswelle (11) zum Antrieb einer Arbeitsmaschine (9) eingerichtet ist, wobei
- der Getriebeabgangswelle (11) die schaltbare Kupplung (4a) vorgeschaltet ist,
- die Antriebseinrichtung mit einem Hilfsantrieb (13) ausgestattet ist, wobei der Hilfsantrieb (13) zum Antrieb der Getriebeabgangswelle (11) eingerichtet ist,
**dadurch gekennzeichnet, dass**
- die Getriebeabgangswelle (11) über die schaltbare Kupplung (4a) mit dem Getriebe (4) verbunden ist.

2. Antriebseinrichtung nach Anspruch 1, **dadurch gekennzeichnet, dass** der Hilfsantrieb (13) dazu eingerichtet ist, wahlweise in einer ersten Drehrichtung und einer zweiten entgegengesetzten Drehrichtung betrieben zu werden, insbesondere dazu eingerichtet ist, sowohl vorwärts als auch rückwärts zu laufen.

3. Antriebseinrichtung nach einem der vorhergehenden Ansprüche, **dadurch gekennzeichnet, dass** der Hilfsantrieb (13) als Hydraulikmotor, Pneumatikmotor oder Elektromotor ausgestaltet ist.

4. Antriebseinrichtung nach einem der vorhergehenden Ansprüche, **dadurch gekennzeichnet, dass** der Hilfsantrieb (13) wahlweise als Hydraulikmotor oder als Hydraulikpumpe arbeiten kann.

5. Antriebseinrichtung nach einem der vorhergehenden Ansprüche, **dadurch gekennzeichnet, dass** das Hauptantriebsmittel (1) als Dieselmotor oder Elektromotor ausgestaltet ist.

6. Antriebseinrichtung nach einem der vorhergehenden Ansprüche, **dadurch gekennzeichnet, dass** die Antriebseinrichtung mit mindestens einer weiteren Hydraulikpumpe (5a bis 5i) ausgestattet ist, die über das Getriebe angetrieben werden kann.

7. Antriebseinrichtung nach einem der vorhergehenden Ansprüche, **dadurch gekennzeichnet, dass** die Hydraulikpumpe (5) oder Hydraulikpumpen (5a bis 5i) über schaltbare Kupplungen (4c bis 4i) wahlweise zu- und abgeschaltet werden können.

8. Antriebseinrichtung nach einem der vorhergehenden Ansprüche, **dadurch gekennzeichnet, dass** zwischen dem Hauptantriebsmittel (1) und dem Getriebe (4), ein Motorschwungrad (1a) und/oder eine elastische Kupplung (3) angeordnet ist.

9. Antriebseinrichtung nach einem der vorhergehenden Ansprüche, **dadurch gekennzeichnet, dass** die Antriebseinrichtung mit einer Reversiereinrichtung für das Hauptantriebsmittel (1) ausgestattet ist, die dazu eingerichtet ist, die Getriebeabgangswelle (11) bei gleichbleibender Drehrichtung des Hauptantriebsmittels (1) in unterschiedlichen Drehrichtungen drehen zu lassen, wobei die Reversiereinrichtung mindestens eine weitere schaltbare Kupplung (4b) umfasst.

10. Arbeitsmaschineneinrichtung, umfassend eine Antriebseinrichtung und eine Arbeitsmaschine (9), **dadurch gekennzeichnet, dass** es sich um eine Antriebseinrichtung gemäß einem der Ansprüche 1 bis 9 handelt.

11. Arbeitsmaschineneinrichtung nach Anspruch 10, **dadurch gekennzeichnet, dass** die Antriebseinrichtung und die Arbeitsmaschine (9) mit einer Übertragungseinrichtung zur Übertragung der Drehbewegung der Getriebeabgangswelle (11) auf die Arbeitsmaschine (9) verbunden sind.

12. Arbeitsmaschineneinrichtung nach Anspruch 11, **dadurch gekennzeichnet, dass** die Übertragungseinrichtung eine Keilscheibe (7a) als Übertragungsmittel der Antriebseinrichtung, eine Keilscheibe (7b) als Übertragungsmittel der Arbeitsmaschine (9), sowie einen oder mehrere zwischen den Übertragungsmitten angeordnete Riemen (7b) als Übertragungselement aufweist.

13. Arbeitsmaschineneinrichtung nach einem der Ansprüche 10 bis 12, **dadurch gekennzeichnet, dass** der Hilfsantrieb (13) zum Antrieb der Arbeitsmaschine (9) im Produktionsbetrieb, sowohl in einer ersten Drehrichtung, als auch in einer zweiten, entgegengesetzten Drehrichtung eingerichtet ist.

14. Verfahren zum Überführen einer Antriebseinrichtung gemäß einem der Ansprüche 1 bis 9 aus einem Ruhezustand in einen Betriebszustand, umfassend nachfolgende Verfahrensschritte:
- die schaltbare(n) Kupplung(en) (4a, 4b) ist / sind ausgekuppelt;
- das Hauptantriebsmittel (1) wird gestartet und auf eine Einschaltdrehzahl, insbesondere auf eine Leerlaufdrehzahl oder "erhöhte" Leerlaufdrehzahl, der schaltbaren Kupplung(en) (4a, 4b) hochgefahren;
- der Hilfsantrieb (13) beschleunigt die Getriebeabgangswelle (11);
- sobald der Hilfsantrieb (13) die Getriebeabgangswelle (11) auf die vorgesehene Einschaltdrehzahl beschleunigt hat, wird die schaltbare Kupplung (4a oder 4b) eingeschaltet und der Hilfsantrieb (13) abgeschaltet.

15. Verfahren zum Überführen einer Arbeitsmaschineneinrichtung gemäß einem der Ansprüche 10 bis 13 aus einem Ruhezustand in einen Betriebszustand, umfassend nachfolgende Verfahrensschritte:
- die schaltbare(n) Kupplung(en) (4a, 4b) ist / sind ausgekuppelt;
- das Hauptantriebsmittel (1) wird gestartet und auf eine Einschaltdrehzahl, insbesondere auf eine Leerlaufdrehzahl oder "erhöhte" Leerlaufdrehzahl, der schaltbaren Kupplung(en) (4a) hochgefahren;
- der Hilfsantrieb (13) beschleunigt die Getriebeabgangswelle (11) und mindestens die Arbeitsmaschine (9);
- sobald der Hilfsantrieb (13) die Getriebeabgangswelle (11) und die Arbeitsmaschine auf die vorgesehene Einschaltdrehzahl beschleunigt hat, wird die schaltbare Kupplung (4a oder 4b) eingeschaltet und der Hilfsantrieb (13) abgeschaltet.

16. Verfahren zur Beseitigung eines Verklemmens einer angeschlossenen Arbeitsmaschine in einer Arbeitsmaschineneinrichtung gemäß einem der Ansprüche 10 bis 13, umfassend nachfolgende Verfahrensschritte:
- Auskuppeln der schaltbaren Kupplung(en) (4a, 4b)
- Anfahren des Hilfsantriebs (13) in einer Drehrichtung entgegengesetzt der durch das Hauptantriebsmittel (1) vorgegebenen Drehrichtung.

## Claims

1. Driving apparatus, comprising at least
- a main driving means (1), a hydraulic pump (5, 5a to 5i), at least one switchable clutch (4a, 4b) and a gear (4), with a first output and at least one second output, wherein
- the main driving means (1) is configured for driving the gear (4), wherein
- the first output of the gear (4) is configured for driving the at least one hydraulic pump (5, 5a to 5i), wherein
- the second output of the gear (4) is configured as a gear output shaft (11) for driving a work machine (9), wherein
- the switchable clutch (4a) is arranged upstream of the gear output shaft (11),
- the driving apparatus is provided with an auxiliary drive (13), wherein the auxiliary drive (13) is configured for driving the gear output shaft (11),
**characterised in that**
- the gear output shaft (11) is connected to the gear (4) via the switchable clutch (4a).

2. Driving apparatus according to claim 1, **characterised in that** the auxiliary drive (13) is configured to be operated selectively in a first direction of rotation and a second, opposite direction of rotation, in particular to run both forwards and also backwards.

3. Driving apparatus according to any of the preceding claims, **characterised in that** the auxiliary drive (13) is configured as a hydraulic motor, pneumatic motor or electric motor.

4. Driving apparatus according to any of the preceding claims, **characterised in that** the auxiliary drive (13) can operate selectively as a hydraulic motor or as a hydraulic pump.

5. Driving apparatus according to any of the preceding claims, **characterised in that** the main driving means (1) is configured as a diesel engine or an electric motor.

6. Driving apparatus according to any of the preceding claims, **characterised in that** the driving apparatus is provided with at least one further hydraulic pump (5a to 5i) which can be driven by the gear.

7. Driving apparatus according to any of the preceding claims, **characterised in that** the hydraulic pump (5) or hydraulic pumps (5a to 5i) can be activated and deactivated selectively via switchable clutches (4c to 4i).

8. Driving apparatus according to any of the preceding claims, **characterised in that** a motor flywheel (1a) and/or an elastic clutch (3) is arranged between the main driving means (1) and the gear (4).

9. Driving apparatus according to any of the preceding claims, **characterised in that** the driving apparatus is provided with a reversing apparatus for the main driving means (1), which is configured to allow the gear output shaft (11) to rotate in different directions of rotation with an unchanging direction of rotation of the main driving means (1), wherein the reversing apparatus comprises at least one further switchable clutch (4b).

10. Work machine apparatus, comprising a driving apparatus and a work machine (9), **characterised in that** the latter is a driving apparatus according to any of claims 1 to 9.

11. Work machine apparatus according to claim 10, **characterised in that** the driving apparatus and the work machine (9) are connected by a transmission apparatus for transmitting the rotational movement of the gear output shaft (11) to the work machine (9).

12. Work machine apparatus according to claim 11, **characterised in that** the transmission apparatus has a V-pulley (7a) as a transmission means of the driving apparatus, a V-pulley (7b) as a transmission means of the work machine (9), and one or more belts (7b) arranged between the transmission centres as the transmission element.

13. Work machine apparatus according to any of claims 10 to 12, **characterised in that** the auxiliary drive (13) is configured to drive the work machine (9) in production operation both in a first direction of rotation and in a second, opposite direction of rotation.

14. Method for bringing a driving apparatus according to any of claims 1 to 9 from a rest state into an operating state, comprising the following method steps:
- the switchable clutch(es) (4a, 4b) is/are declutched;
- the main driving means (1) is started and run up to an activation speed, in particular to an idling speed or "increased" idling speed of the switchable clutch(es) (4a, 4b);
- the auxiliary drive (13) accelerates the gear output shaft (11);
- as soon as the auxiliary drive (13) has accelerated the gear output shaft (11) to the intended activation speed, the switchable clutch (4a or 4b) is activated and the auxiliary drive (13) is deactivated.

15. Method for bringing a work machine apparatus according to any of claims 10 to 13 from a rest state into an operating state, comprising the following method steps:
- the switchable clutch(es) (4a, 4b) is/are declutched;
- the main driving means (1) is started and run up to an activation speed, in particular to an idling speed or "increased" idling speed of the switchable clutch(es) (4a);
- the auxiliary drive (13) accelerates the gear output shaft (11) and at least the work machine (9);
- the switchable clutch (4a or 4b) is activated and the auxiliary drive (13) is deactivated as soon as the auxiliary drive (13) has accelerated the gear output shaft (11) and the work machine to the intended activation speed.

16. Method for eliminating jamming of a connected work machine in a work machine apparatus according to any of claims 10 to 13 comprising the following method steps:
- declutching the switchable clutch(es) (4a, 4b)
- starting up the auxiliary drive (13) in a direction of rotation opposite to the direction of rotation defined by the main driving means (1).

## Revendications

1. Dispositif d'entraînement, comprenant au moins
- un moyen d'entraînement principal (1), une pompe hydraulique (5, 5a à 5i), au moins un accouplement embrayable (4a, 4b) et une transmission (4), avec une première sortie et au moins une deuxième sortie, dans lequel
- le moyen d'entraînement principal (1) est conçu pour entraîner la transmission (4), dans lequel
- la première sortie de la transmission (4) est conçue pour entraîner l'au moins une pompe hydraulique (5, 5a à 5i), dans lequel
- la deuxième sortie de la transmission (4) est conçue en tant qu'arbre de transmission mené (11) pour entraîner une machine de travail (9), dans lequel
- l'accouplement embrayable (4a) est monté en amont de l'arbre de transmission mené (11),
- le dispositif d'entraînement est équipé d'un entraînement auxiliaire (13), dans lequel l'entraînement auxiliaire (13) est conçu pour entraîner l'arbre de transmission mené (11),
**caractérisé en ce que**
- l'arbre de transmission mené (11) est relié à la transmission (4) par l'intermédiaire de l'accouplement embrayable (4a).

2. Dispositif d'entraînement selon la revendication 1, **caractérisé en ce que** l'entraînement auxiliaire (13) est conçu pour fonctionner sélectivement dans une première direction de rotation et une deuxième direction de rotation opposée, en particulier est conçu pour marcher aussi bien vers l'avant que vers l'arrière.

3. Dispositif d'entraînement selon l'une quelconque des revendications précédentes, **caractérisé en ce que** l'entraînement auxiliaire (13) est réalisé en tant que moteur hydraulique, moteur pneumatique ou moteur électrique.

4. Dispositif d'entraînement selon l'une quelconque des revendications précédentes, **caractérisé en ce que** l'entraînement auxiliaire (13) peut fonctionner sélectivement en tant que moteur hydraulique ou en tant que pompe hydraulique.

5. Dispositif d'entraînement selon l'une quelconque des revendications précédentes, **caractérisé en ce que** le moyen d'entraînement principal (1) est réalisé en tant que moteur diesel ou moteur électrique.

6. Dispositif d'entraînement selon l'une quelconque des revendications précédentes, **caractérisé en ce que** le dispositif d'entraînement est équipé d'au moins une autre pompe hydraulique (5a à 5i), qui peut être entraînée par l'intermédiaire de la transmission.

7. Dispositif d'entraînement selon l'une quelconque des revendications précédentes, **caractérisé en ce que** la pompe hydraulique (5) ou les pompes hydrauliques (5a à 5i) peuvent être activées et désactivées sélectivement par l'intermédiaire d'accouplements embrayables (4c à 4i).

8. Dispositif d'entraînement selon l'une quelconque des revendications précédentes, **caractérisé en ce qu'**un volant moteur (la) et/ou un accouplement élastique (3) sont disposés entre le moyen d'entraînement principal (1) et la transmission (4).

9. Dispositif d'entraînement selon l'une quelconque des revendications précédentes, **caractérisé en ce que** le dispositif d'entraînement est équipé d'un dispositif d'inversion pour le moyen d'entraînement principal (1), qui est conçu pour faire tourner l'arbre de transmission mené (11), pour une direction de rotation constante du moyen d'entraînement principal (1), dans différentes directions de rotation, dans lequel le dispositif d'inversion comprend au moins un autre accouplement embrayable (4b).

10. Dispositif de machine de travail, comprenant un dispositif d'entraînement et une machine de travail (9), **caractérisé en ce qu'**il s'agit d'un dispositif d'entraînement selon l'une quelconque des revendications 1 à 9.

11. Dispositif de machine de travail selon la revendication 10, **caractérisé en ce que** le dispositif d'entraînement et la machine de travail (9) sont reliés à un dispositif de transmission pour la transmission du mouvement de rotation de l'arbre de transmission mené (11) sur la machine de travail (9).

12. Dispositif de machine de travail selon la revendication 11, **caractérisé en ce que** le dispositif de transmission présente une rondelle conique (7a) en tant que moyen de transmission du dispositif d'entraînement, une rondelle conique (7b) en tant que moyen de transmission de la machine de travail (9), ainsi qu'une ou plusieurs courroies (7b), disposées entre les moyens de transmission, en tant qu'élément de transmission.

13. Dispositif de machine de travail selon l'une quelconque des revendications 10 à 12, **caractérisé en ce que** l'entraînement auxiliaire (13) est conçu pour entraîner la machine de travail (9) en mode production, aussi bien dans une première direction de rotation que dans une deuxième direction de rotation opposée.

14. Procédé pour amener un dispositif d'entraînement selon l'une quelconque des revendications 1 à 9 d'un état de repos dans un état de fonctionnement, comprenant les étapes de procédé suivantes :
- l'/les accouplement(s) embrayable(s) (4a, 4b) est/sont découplés ;
- le moyen d'entraînement principal (1) est démarré et monté à un régime de mise en marche, en particulier à un régime de ralenti ou régime de ralenti « augmenté », de l'/des accouplement(s) embrayable(s) (4a, 4b) ;
- l'entraînement auxiliaire (13) accélère l'arbre de transmission mené (11) ;
- dès que l'entraînement auxiliaire (13) a accéléré l'arbre de transmission mené (11) au régime de mise en marche prévu, l'accouplement embrayable (4a ou 4b) est mis en marche et l'entraînement auxiliaire (13) mis hors service.

15. Procédé pour amener un dispositif de machine de travail selon l'une quelconque des revendications 10 à 13 d'un état de repos dans un état de fonctionnement, comprenant les étapes de procédé suivantes :
- l'/les accouplement(s) embrayable(s) (4a, 4b) est/sont découplés ;
- le moyen d'entraînement principal (1) est démarré et monté à un régime de mise en marche, en particulier à un régime de ralenti ou régime de ralenti « augmenté », de l'/des accouplement(s) embrayable(s) (4a) ;
- l'entraînement auxiliaire (13) accélère l'arbre de transmission mené (11) et au moins la machine de travail (9) ;
- dès que l'entraînement auxiliaire (13) a accéléré l'arbre de transmission mené (11) et la machine de travail au régime de mise en marche prévu, l'accouplement embrayable (4a ou 4b) est mis en marche et l'entraînement auxiliaire (13) mis hors service.

16. Procédé pour supprimer un blocage d'une machine de travail raccordée dans un dispositif de machine de travail selon l'une quelconque des revendications 10 à 13, comprenant les étapes de procédé suivantes :
- le désaccouplement de l'/des embrayage(s) embrayable(s) (4a, 4b)
- la mise en mouvement de l'entraînement auxiliaire (13) dans une direction de rotation opposée à la direction de rotation prédéfinie par le moyen d'entraînement principal (1).
